# EUROPÄISCHE PATENTSCHRIFT

(11) **EP 2 159 345 B1**
(45) Veröffentlichungstag und Bekanntmachung des Hinweises auf die Patenterteilung: **19.10.2011**
(21) Anmeldenummer: 08163115.2
(22) Anmeldetag: 27.08.2008
(51) Int. Cl.: E04F 13/08

(54) **Halterung für Verkleidungselemente**
Mount for covering elements
Fixation pour éléments de revêtement

(43) Veröffentlichungstag der Anmeldung: 03.03.2010
(73) Patentinhaber: Guido Berger Produktmanagement GmbH, 33378 Rheda-Wiedenbrück (DE)
(72) Erfinder: Berger, Guido, 33378 Rheda-Wiedenbrück (DE)
(74) Vertreter: Zenz

(56) Entgegenhaltungen:
- WO-A-01/57406
- DE-A1- 10 327 312
- DE-A1-102006 039 653

## Beschreibung

Die vorliegende Erfindung betrifft eine Halterung für Verkleidungselemente bzw. eine Verkleidungselemente-Unterkonstruktion. Insbesondere betrifft die vorliegende Erfindung eine Halterung mit einem Innenprofil, das drehfest, radial fixiert und axial verschiebbar gegenüber einem Außenprofil in diesem gelagert ist, wobei eines der Profile einen Befestigungsfuß und das andere Profil einen Montagekopf aufweist, wobei sich die ineinandergreifenden Profile in axialer Richtung zwischen dem Befestigungsfuß und dem Montagekopf derart erstrecken, dass der Abstand zwischen dem Befestigungsfuß und dem Montagekopf durch die Länge des Eingriffs des Innenprofils in das Außenprofil bestimmt und die Länge des Eingriffs einstellbar ist, wobei mit dem Innenprofil und mit dem Außenprofil Mittel zum Einstellen und Fixieren der Länge des Eingriffs des Innenprofils in das Außenprofil verbunden sind.

Bei bekannten Halterungen der eingangs genannten Art handelt es sich um Halterungen mit lediglich einem Freiheitsgrad, und zwar einem translatorischen Freiheitsgrad, d.h. entsprechende Halterungen sind lediglich in der Länge verstellbar. Daher können mit solchen Halterungen nur solche Elemente an einem Untergrund schnell und kostengünstig befestigt werden, die parallel zu diesem verlaufen. Eine entsprechende Halterung ist beispielsweise in der nachveröffentlichten europäischen Patentanmeldung Nr. 07 120 823.5 beschrieben.

Ferner ist aus der WO 01/57406 A2 eine Vorrichtung zum verspannenden Verbinden von mit Abstand zueinander liegenden Bauteilen bekannt, wobei die Verbindung mit einem in einem Abstandsraum angeordneten Distanzstück und einem die beiden Bauteile verspannenden Spannstück erreicht wird. Aus der CH 270 176 A ist eine Aufhängevorrichtung für Verkleidungsplatten bekannt, welche eine mit den Verkleidungsplatten zu verbindende Einrichtung, einen in der Einrichtung axial verschiebbaren und feststellbaren Bolzen sowie eine als Träger der Verkleidungsplatten dienende, lösbar mit dem Bolzen verbundene Schiene aufweist. Schließlich ist aus der DE 103 27 312 A1 ein Abstandselement zum Einstellen eines Abstandes zwischen einer Wand und einem vor der Wand angeordneten Bauelement bekannt, wobei dieses Abstandselement ein an der Wand fixierbares Wandelement und ein an dem Bauelement fixierbares Verbindungselement aufweist, zwischen denen eine Stellhülse angeordnet ist.

Sollen jedoch Elemente in einem bestimmten Winkel zu einem Untergrund befestigt werden, oder sind die zu befestigten Elemente nicht eben, ist eine Befestigung mit den bekannten Halterungen nicht ohne weiteres möglich. Vielmehr sind zeitaufwendige und damit kostenintensive Vorarbeiten notwendig.

Ausgehend von dem bekannten Stand der Technik liegt der Erfindung die Aufgabe zugrunde, eine kostengünstige Halterung bereitzustellen, mit der auch nicht ebene oder nicht parallel zu einem Untergrund verlaufende Elemente schnell und unkompliziert an diesem befestigt werden können.

Diese Aufgabe wird erfindungsgemäß durch eine Halterung mit den Merkmalen des Patentanspruchs 1 gelöst.

Die eingangs genannte Halterung ist erfindungsgemäß **dadurch gekennzeichnet, dass** der Montagekopf oder der Befestigungsfuß ein in einer zur axialen Richtung nicht senkrechten Ebene bewegbares Gelenk umfasst, das einen Gelenkkopf und eine Gelenkpfanne aufweist, wobei der Gelenkkopf und/oder die Gelenkpfanne zumindest eine Gleitfläche in Form eines Kreiszylindersegmentes aufweist.

Bei dem Montagekopf oder dem Befestigungsfuß ist durch das Gelenk ein weiterer Freiheitsgrad bereitgestellt, so dass es mit der erfindungsgemäßen Halterung möglich ist, ebene Elemente auf einfache Weise in einem bestimmten Winkel zu einem Untergrund an diesem zu befestigen. Ferner ist es mit der erfindungsgemäßen Halterung möglich, insbesondere bei großflächigen Verkleidungselementen, Unebenheiten des Untergrundes auszugleichen, da die Halterung zum einen in der Länge justierbar ist und zum anderen eine Dreh- bzw. Schwenkachse zur Verfügung stellt.

Bei dem Aufbau des Gelenks ist man nicht auf die Anordnung des Gelenkkopfes bzw. der Gelenkpfanne innerhalb des Befestigungsfußes oder des Montagekopfes festgelegt. Je nach Konstruktion des Gelenkkopfes und der entsprechenden Gelenkpfanne können diese derart in der Haltung angeordnet sein, dass entweder der Gelenkkopf oder die Gelenkpfanne an einem der Profile festgelegt ist.

Die Halterung wird stets so montiert, dass diese über den Befestigungsfuß an dem Untergrund und das Element an dem Montagekopf fixiert wird, wobei zur Befestigung eines Elementes üblicherweise eine Mehrzahl von Halterungen verwendet werden.

Um die Einsatzmöglichkeiten der Halterung zu erweitern, ist es bevorzugt, dass der Montagekopf und der Befestigungsfuß ein in einer Ebene bewegbares Gelenk umfassen, das jeweils einen Gelenkkopf und eine Gelenkpfanne aufweist, wobei die Gelenkköpfe und/oder die Gelenkpfannen zumindest eine Gleitfläche in Form eines Kreiszylindersegments aufweisen. Eine derart ausgebildete Halterung weist einen zusätzlichen Freiheitsgrad auf, d.h. insgesamt drei Freiheitsgrade, und zwar einen translatorischen und zwei rotatorische. Mit einer solchen Halterung ist es auch möglich, unregelmäßig konkave oder konvexe oder völlig unebene Elemente schnell und ohne vorbereitende Arbeiten an einem Untergrund zu befestigen. Zwar wäre es bei entsprechender Ausrichtung der Halterungen auch möglich, regelmäßig konkave oder konvexe Elemente mit Halterungen mit nur einem Gelenk an einem Untergrund zu befestigen, jedoch müssen die Halterung dann in einer genau vorherberechten Position an dem Untergrund angebracht werden, damit eine Befestigungsmöglichkeit Element/Montagekopf besteht. Dies kann zu Problemen bei der Kräfteverteilung an den Halterungen führen, da diese, im Hinblick auf den Schwerpunkt des Elements, nicht gleichmäßig angebracht werden können.

Auch bei der Verwendung von zwei Gelenken ist man nicht auf eine bestimmte Anordnung der Gelenkköpfe bzw. der Gelenkpfannen festgelegt. So ist es beispielsweise möglich, dass sowohl bei dem Montagekopf als auch dem Befestigungsfuß der Gelenkkopf an einem Profil festgelegt ist. Es ist jedoch auch möglich, dass bei dem Montagekopf die Gelenkpfanne an einem Profil und bei dem Befestigungsfuß der Gelenkkopf an einem Profil festgelegt ist.

Bei einer bevorzugten Ausführungsform weist der Gelenkkopf des oder wenigstens eines Gelenks und die Gelenkpfanne des oder wenigstens eines Gelenks jeweils eine Gleitfläche in Form eines Kreiszylindersegments auf, wobei die Längsdrehachsen der den Kreiszylindersegmenten entsprechenden Kreiszylinder (die sich durch die Länge des Kreiszylinders erstreckenden Achsen) zusammenfallen und vorzugsweise die Längsachse der Halterung schneiden. Bei dieser Ausführungsform funktioniert das bzw. die Gelenke also wie ein Scharniergelenk, wobei der bzw. die Gelenkköpfe einen Teil einer bei Scharniergelenken üblichen Walze darstellen.

Der Gelenkkopf des oder wenigstens eines Gelenks weist bei einer alternativen Ausführungsform ein Hohlkreiszylindersegment mit einer inneren und einer äußeren Gleitfläche auf. Die Gelenkpfanne des oder wenigstens eines Gelenks ist entsprechend ausgebildet, d.h. derart, dass ein Hohlkreiszylindersegment in diese eingeführt und in dieser geführt werden kann. Um eine Einführung des Hohlkreiszylindersegments in die Gelenkpfanne zu gewährleisten bzw. zu vereinfachen, kann die Gelenkpfanne bei zumindest einer Stirnseite geöffnet sein, so dass der Gelenkkopf von der Stirnfläche her in die Gelenkpfanne eingeschoben werden kann.

Die Gelenkpfanne kann einfach komplementär ausgebildet sein, also mit zwei in einem bestimmten Abstand zueinander verlaufenden an das Hohlkreiszylindersegment angepassten Gleitflächen. Die Pfanne kann auch durch eine Mehrzahl von Gleitflächen bei der inneren und äußeren Gleitfläche des Hohlkreiszylindersegments gebildet sein, wobei jede der Gleitflächensegmente der Gelenkpfanne an das Hohlkreiszylindersegment entsprechend angepasst ist. Ferner können die Gleitflächen der Gelenkpfanne auch durch eine Mehrzahl von Gleitpunkten oder Gleitlinien bereitgestellt werden, die so angeordnet sind, dass das die innere und die äußere Gleitfläche des Hohlkreiszylindersegments entsprechend geführt ist.

Bei dieser Ausgestaltung des Gelenks ist jedoch von Nachteil, dass der Mittelpunkt des Gelenkkopfes bei einer rotatorischen Bewegung auch eine translatorische Bewegung erfährt, da die Längsdrehachse des dem Hohlkreiszylindersegment entsprechenden Hohlkreiszylinders (die sich durch die Länge des Kreiszylinders erstreckende Achse) nicht die zentrale Längsachse der Halterung schneidet.

Das Hohlkreiszylindersegment ist daher bevorzugt derart ausgebildet, dass die Drehachse des entsprechenden Hohlkreiszylinders die zentrale Längsachse der Halterung schneidet. In einem solchen Fall funktioniert das Gelenk wie ein Scharniergelenk, wobei der bei üblichen Scharniergelenken als Walze ausgebildete Gelenkkopf durch das Hohlkreiszylindersegment ausgebildet ist.

Das Hohlkreiszylindersegment kann an seiner innen Gleitfläche durchgängig sein, d.h. das Hohlkreiszylindersegment ist "einstückig" in Bezug auf die innere Gleitfläche. Dies ermöglicht einen großen Drehwinkel bei dem Gelenk.

Aufgrund der bevorzugten Anwendung der Halterung ist ein großer Drehwinkel jedoch nicht unbedingt erforderlich, so dass der Gelenkkopf des oder wenigstens eine Gelenks bevorzugt zwei Hohlkreiszylindersegmenten aufweist, die in einem definierten Abstand derart zueinander an einer entsprechenden Gelenkkopfplatte angeordnet sind, dass die Drehachse des zugehörigen Hohlkreiszylinders die zentrale Längsachse der Halterung schneidet.

Um eine möglichst große Flexibilität der Halterung zu erreichen, weisen die beiden Bewegungsebenen der Gelenke vorzugsweise einen Winkel von 90° zueinander auf.

Die Mittel zum Einstellen und Fixieren der Länge des Eingriffs des Innenprofils in das Außenprofil können beispielsweise durch eine Madenschraube bereitgestellt werden, die durch eine Öffnung in dem Außenprofil geführt ist, und welche bei entsprechender Positionierung der Halterung angezogen wird und das Innen- an dem Außenprofil fixiert. Eine solche Ausgestaltung der Mittel zum Einstellen und Fixieren der Länge des Eingriffs des Innenprofils in das Außenprofil hat den Nachteil, dass zum Fixieren seitlich auf die Halterung zugegriffen werden muss, was bei der Montage der Elemente nachteilig sein kann. Ferner muss das Innenprofil relativ lose in dem Außenprofil geführt sein, was eine exakte Einstellung der Eingriffslänge erschwert.

Bei einer bevorzugten Ausführungsform der Halterung sind daher die Mittel zum Einstellen und Fixieren der Länge des Eingriffs des Innenprofils in das Außenprofil derart realisiert, dass das Innenprofil ein sich in axialer Richtung erstreckendes Innengewinde oder ein ein solches Innengewinde aufweisendes, axial und drehfest festgelegtes Bauteil aufweist, wobei sich eine Schraube mit einem Schraubenkopf, einem Justiermittel und einem in das Innengewinde eingreifenden Außengewinde durch zumindest einen Teil des Außenprofils und des Innenprofils in axialer Richtung erstreckt, und wobei der Schraubenkopf gegenüber dem Außenprofil axial festgelegt, aber drehbar ist, und wobei auf das Justiermittel der Schraube zum Einstellen der Länge des Eingriffs des Innenprofils in das Außenprofil zugegriffen werden kann.

Bei einer entsprechenden Ausgestaltung der Mittel zum Einstellen und Fixieren der Länge des Eingriffs des Innenprofils in das Außenprofil kann von vorne auf das Justiermittel zugegriffen werden, was das Einstellen und Fixieren der Halterung stark vereinfacht und so eine rasche Montage der Elemente ermöglicht. Ferner ist es bei dieser Ausführungsform möglich, die Eingriffslänge sehr präzise einzustellen.

Um eine konstruktiv einfache und besonders preisgünstig herstellbare Halterung zu gewährleisten, weist bei einer bevorzugten Ausführungsform das Innenprofil den Befestigungsfuß auf und der Montagekopf ist an dem Außenprofil befestigt, und der Gelenkkopf des Befestigungsfußes ist einstückig mit dem Innenprofil ausgebildet.

Die oben genannte Ausführungsform der Halterung ermöglicht es, dass das Außenprofil, das Innenprofil einschließlich Gelenkkopf, die Gelenkpfanne des Befestigungsfußes sowie der Gelenkkopf und die Gelenkpfanne des Montagekopfes jeweils aus Endlosprofilen geschnittene Abschnitte sind, wobei deren Schnittebenen parallel zur Axialrichtung der Halterung und die Schnittebene des Außenprofils quer zur Axialrichtung der Halterung verlaufen.

Bezogen auf die Endlosprofile verlaufen die oben genannten Schnittebenen stets quer zu deren Längsachsen, was natürlich erst die Fertigung der Bauteile im Stranggussverfahren ermöglicht.

Projiziert man die Längachsen der den Bauteilen, mit Ausnahme des Außenprofils, zugrunde liegenden Endlosprofile in die Halterung bedeutet dies, dass diese Längsachsen einen Winkel von 90° zu der Längsachse der Halterung bilden.

Die Schnittebenen des Außenprofils verlaufen - wieder bezogen auf die Position des Bauteils in der Halterung - quer zur Längsrichtung bzw. Axialrichtung der Halterung. Projiziert man diese Achse wiederum in die Halterung, bedeutet dies, dass diese Längsachse parallel zu der Längsachse bzw. Axialrichtung der Halterung verläuft.

Eine derartige Ausgestaltung der Halterung wird erst durch den modularen Aufbau ermöglicht, da so verschiedene Abschnitte mehrerer Endlosprofile gegeneinander verdreht werden können. Auf diese Weise kann man in der Halterung Ebenen bzw. Stege quer zur Längsrichtung der Halterung erhalten, obgleich diese lediglich aus Stranggussabschnitten besteht. Eine solche Ausgestaltung ist besonders vorteilhaft, da die Bauteile schnell, preiswert und in großer Stückzahl hergestellt werden können, was einen großen ökonomischen Vorteil bedeutet. Natürlich müssen nach der Vereinzelung der Bauteile noch die notwendigen Öffnungen beispielsweise eingebohrt werden, was mit modernen Werkzeugmaschinen jedoch keinen übermäßigen Arbeitsaufwand bedeutet.

Die einzelnen Bauteile der Halterung können aus einem beliebigen geeigneten Material gefertigt sein, wobei die einzelnen Materialien an den Anwendungszweck anzupassen sind. Dient die Halterung beispielsweise zum Befestigen von Witterungseinflüssen ausgesetzten Fassadenelementen, so ist darauf zu achten, dass nicht rostende Materialien verwendet werden. Die Schraube ist in einem solchen Fall vorzugsweise aus rostfreiem Stahl bzw. Edelstahl gefertigt. Bei einer bevorzugten Ausführungsform der erfindungsgemäßen Halterung sind der Montagekopf, das Außen- und das Innenprofil sowie der Befestigungsfuß aus Aluminium oder einer Aluminiumlegierung gefertigt. Die aus Aluminium oder einer Aluminiumlegierung gefertigten Bauteile sind leicht, preisgünstig herzustellen und unempfindlich gegenüber Witterungseinflüssen.

Die Halterung wird bevorzugt zur Befestigung von Fassadenelementen oder einer Unterkonstruktion für Fassadenelemente verwendet. Um einen Wärmeübergang von dem Untergrund auf die Halterung zu vermeiden, weist eine bevorzugte Ausführungsform der Halterung an der Gelenkpfanne des Befestigungsfußes ein Isolationsmittel auf, dass eine thermische Isolation zwischen einer Bodenfläche der Gelenkpfanne des Befestigungsfußes und dem Untergrund bereitgestellt.

Zur Unterstützung bei der Justierung der Halterung ist bei einer bevorzugten Weiterbildung der Halterung in Längsrichtung des Innenprofils auf diesem eine Skala angeordnet. Die Skala kann beispielsweise in das Innenprofil eingeprägt oder auf dieses aufgeklebt sein. Die Skala kann derart gestaltet sein, dass ein Bereich der Skala optisch vor einer zu geringen Eingriffslänge zwischen Außen- und Innenprofil warnt. Die Skala ist üblicherweise in mm-Abschnitte unterteilt, die beispielsweise die Eingriffslänge zwischen den Profilen aufzeigt. Bei einer Ausführungsform kann die Skala als eine Doppelskala ausgebildet sein, die neben mm-Abschnitten auch Angaben darüber aufweist, bei welcher Eingriffslänge das Halteelement welche Kräfte aufnehmen kann.

Zur Unterstützung der Justierung der Gelenke ist bei einer bevorzugten Ausführungsform der Halterung zumindest ein Gelenkkopf mit einer Skala versehen, auf der man den eingestellten Gelenkwinkel ablesen kann.

Bei üblichen Halterungen für Verkleidungselemente bzw. eine Verkleidungselemente-Unterkonstruktion sind die Elemente zumeist lösbar mit der Halterung verbunden. Zwar gewährleistet die übliche Befestigung, dass die Elemente gegen Witterungseinflüsse geschützt sind, jedoch kann mit den üblichen Halterungen nicht verhindert werden, dass die Elemente mutwillig entfernt werden. Bei einer bevorzugten Ausführungsform der Halterung weist die Gelenkpfanne des Montagekopfes oder der Gelenkkopf des Montagekopfes, also der Teil des Montagekopfes, an dem die Elemente befestigt werden, einen Sicherungsabschnitt auf, über welchen die zu befestigenden Elemente an der Halterung gesichert werden können, wobei der Sicherungsabschnitt derart an der Gelenkpfanne bzw. dem Gelenkkopf angeordnet ist, dass die Drehbarkeit der Gelenkpfanne bzw. des Gelenkkopfes gewährleistet ist. Die Elemente werden nach dem Anbringen an dem Gelenkkopf bzw. der Gelenkpfanne gegen ein Lösen gesichert, wobei auf die Sicherung nur zugegriffen werden kann, wenn benachbarte Elemente entfernt bzw. noch nicht montiert sind. Durch diese Maßnahme wird eine mutwillige Entfernung der Elemente verhindert.

Der Sicherungsabschnitt weist vorzugweise eine Ausnehmung auf, in welcher ein Sicherungselement verschiebbar und über entsprechende Stellmittel justierbar angeordnet ist. Eine derartige Ausgestaltung des Sicherungsabschnittes ist besonders einfach bedienbar und nach Demontage der Elemente wieder verwertbar. Zur Montage der Elemente werden beispielsweise entsprechende Halteelemente der Halterungen in entsprechende Ausnehmungen der Sicherungsabschnitte eingeführt. Sobald sämtliche Halteelemente eingeführt sind, werden diese, und damit das Element selber, durch ein Verschieben der Sicherungselemente gegen ein Entfernen gesichert. Abschließend werden die Sicherungselemente über die Stellmittel justiert, so dass diese sich nicht ungewollt lösen können.

Bei der Befestigung der Elemente werden diese über die Halterung örtlich fixiert. Dabei ist es, insbesondere bei ebenen und großflächigen Elementen, wichtig, dass die Elemente exakt zueinander ausgerichtet sind. Dazu werden die Halterungen an genau vorbestimmten Punkten an einem Untergrund befestigt. Um eine geringe Abweichung bei der Positionierung der Halterungen oder Fertigungstoleranzen bei den Elementen auszugleichen, ist das das Sicherungselement in der Ausnehmung bei einer bevorzugten Ausführungsform über die Stellmittel höhenverstellbar.

Im nachfolgenden wird die Erfindung unter Bezugnahme auf in den Figuren dargestellte Ausführungsbeispiele näher beschrieben, wobei
Figur 1a eine schematische Schnittansicht eines ersten Ausführungsbeispiels der erfindungsgemäßen Halterung zeigt,
Figur 1b eine schematische Schnittansicht eines zweiten Ausführungsbeispiels der erfindungsgemäßen Halterung zeigt,
Figuren 2a und 2b eine Schnittansicht eines dritten Ausführungsbeispiels der erfindungsgemäßen Halterung zeigen,
Figur 2c eine Schnittansicht einer vierten Ausführungsform der erfindungsgemäßen Halterung zeigen,
Figur 3a eine Seitenansicht des in den Figuren 2a und 2b dargestellten dritten Ausführungsbeispiels zeigt,
Figur 3b eine Seitenansicht des in Figur 2c dargestellten vierten Ausführungsbeispiels zeigt,
Figuren 4a und 4b Detailansichten des Gelenkkopfs und der Gelenkpfanne des Montagekopfes des dritten Ausführungsbeispiels zeigen,
Figuren 4c und 4d Detailansichten des Gelenkkopfs und der Gelenkpfanne des Montagekopfes des vierten Ausführungsbeispiels zeigen,
Figuren 5a - 5c Detailansichten des Innenprofils einschließlich des Gelenkkopfes des Befestigungsfußes, der Gelenkpfanne des Befestigungsfußes sowie eines Einlageelementes zeigen,
Figur 6 eine Detailansicht eines Einlageelements zeigt,
Figur 7 eine Detailansicht einer Befestigungseinlage zeigt, und
Figuren 8a und 8b Detailansichten des Sicherungselementes gemäß dem vierten Ausführungsbeispiels zeigen.

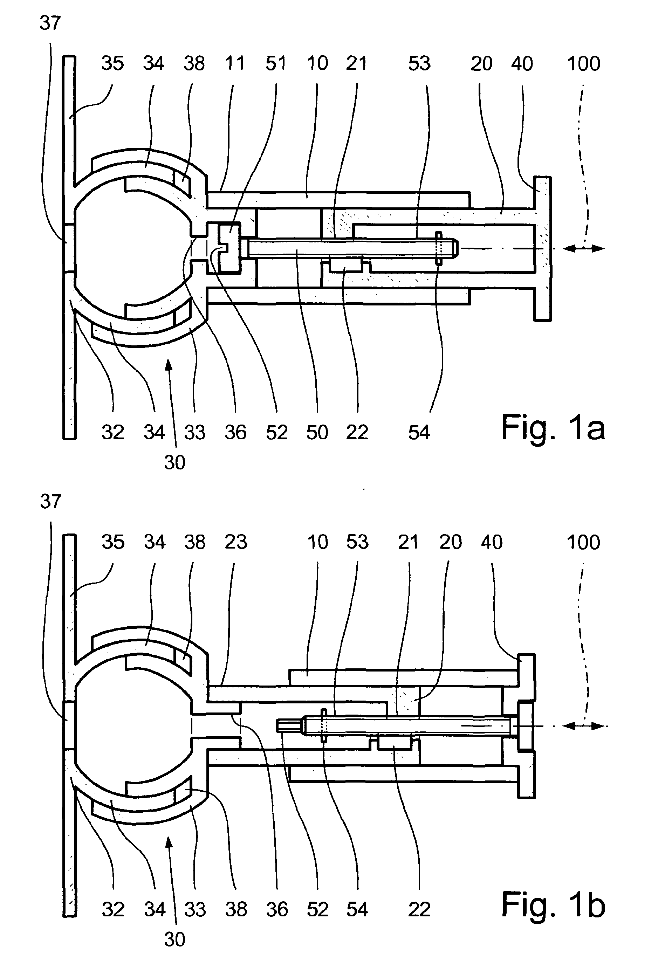

Figur 1a veranschaulicht eine schematische Schnittansicht eines ersten Ausführungsbeispiels der erfindungsgemäßen Halterung, wobei diese Ansicht lediglich das allgemeine Prinzip der Erfindung anhand eines exemplarischen Montagekopfes verdeutlichen soll - Details der erfindungsgemäßen Halterung sind bei dieser Ansicht nur teilweise dargestellt.

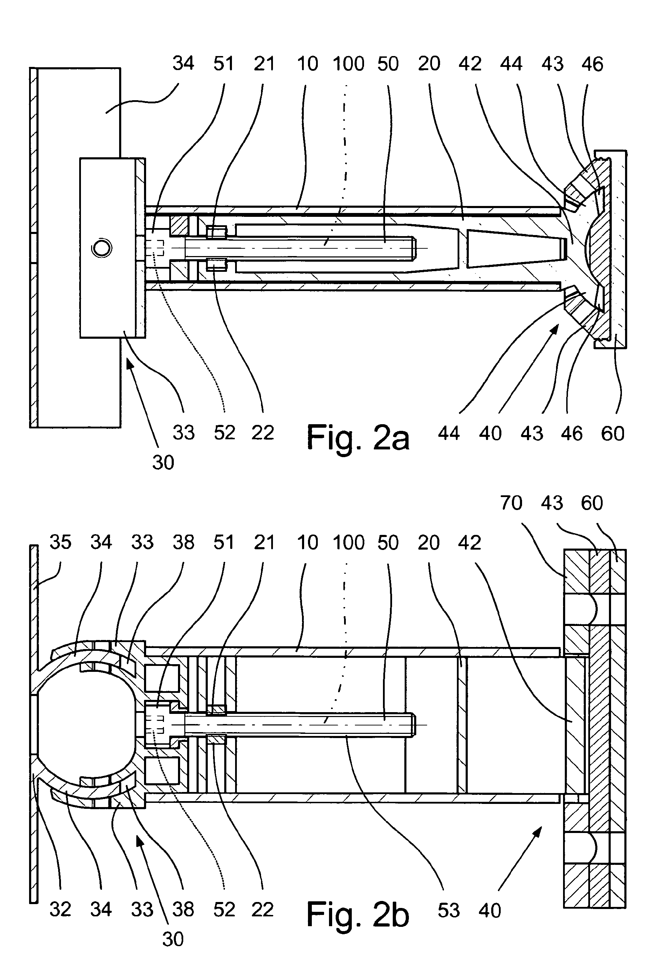

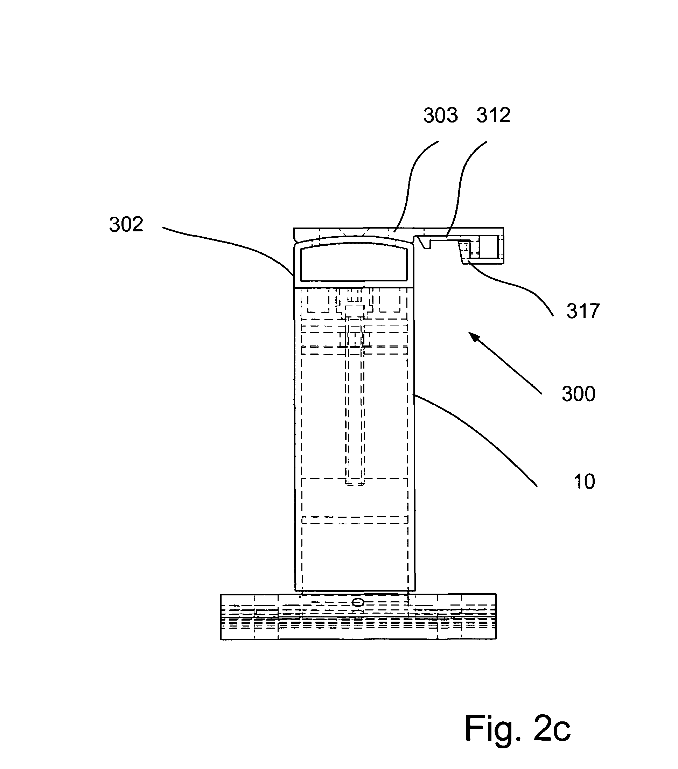

Das Ausführungsbeispiel gemäß Figur 1a umfasst ein Innenprofil 20 mit einem Befestigungsfuß 40, wobei dieser Befestigungsfuß 40 einstückig mit dem Innenprofil 20 ausgebildet ist (eine detaillierte Beschreibung des Befestigungsfußes erfolgt bei den Figuren 2 - 5). Mit der strichpunktierten Linie 100, die sich zentral durch die gesamte Halterung erstreckt, ist die Längsrichtung/Zentralachse bzw. die axiale Richtung der Halterung angedeutet. Das bei diesem Ausführungsbeispiel dargestellt Innenprofil 20 umfasst keine Stege bzw. Ebenen, die sich parallel zur Schnittebene erstrecken. Sämtliche Stege bzw. Ebenen erstrecken sich im rechten Winkel zur Schnittebene. Diese Ausgestaltung des Innenprofils 20 ermöglicht, dass dieses als Abschnitt eines Endlosprofils hergestellt werden kann.

Im Bereich des Befestigungsfußes 40 kann das Innenprofil (über nicht dargestellte Befestigungsmittel) an einem geeigneten Untergrund befestigt werden. Bei einem dem Befestigungsfuß abgewandten Bereich weist das Innenprofil 20 einen Gewindebereich 21, 22 auf. Bei dem dargestellten Ausführungsbeispiel sind zwei verschiedene Arten der Bereitstellung eines Gewindes, d.h. zwei unterschiedliche Gewindebereiche, veranschaulicht. Bei einer zur Anwendung kommenden Ausführung der Halterung ist jedoch nur eine dieser Arten der Gewindebereitstellung verwirklicht, und zwar in Abhängigkeit von dem verwendeten Material sowie dem Anwendungszweck der Halterung. Das Gewinde wird dann natürlich vollumfänglich bereitgestellt, und nicht lediglich, wie in Figur 1a angedeutet, bei einer Hälfte der Halterung.

In der bezüglich des gezeigten Ausführungsbeispiels "oberen" Hälfte des Ausführungsbeispiels wird das Gewinde bereitgestellt, indem in die dem Befestigungsfuß 40 abgewandte Stirnseite des Innenprofils ein Innengewinde 21 eingebracht ist, welches mit einem sich durch die Halterung erstreckenden Außengewinde 53 einer Schraube 50 in Eingriff steht. Das Innengewinde 21 wird nach Herstellung des Innenprofils 20 mit geeigneten Verfahren in dieses eingebracht.

In der "unteren" Hälfte der Figur 1a ist das Innengewinde bereitgestellt, indem ein Bauteil mit einem Innengewinde 22 bereitgestellt ist, welches zwischen zwei Stegen des Innenprofils axial und drehfest festgelegt ist. Das Innengewinde 22 des Bauteils steht in Eingriff mit dem Außengewinde 53 der Schraube 50.

Das Innenprofil 20 ist bei der in Figur 1a gezeigten Montagestellung teilweise von einem Außenprofil 10 umgeben. Das Außenprofil 10 ist in dem gezeigten Ausführungsbeispiel als durchgehender quadratischer Zylinder mit offenen Stirnseiten ausgeführt. Bei anderen Ausführungsbeispielen kann das Außenprofil 10 jedoch auch so ausgebildet sein, dass dieses in einer Ebene der Mantelfläche des Zylinders eine Ausnehmung in Längsrichtung aufweist. Eine solche Ausgestaltung des Zylinders kann zu einer Gewichtsreduktion der Halterung beitragen. Das Außenprofil 10 ist so ausgestaltet, dass auch dieses als Abschnitt eines Endlosprofils erhalten werden kann, wobei die Längsrichtung eines entsprechenden Profils parallel zu der Längsachse 10 der Halterung verlaufen würde.

Die Eingriffstiefe zwischen dem Innenprofil 20 und dem Außenprofil 10 wird über die Schraube 50 eingestellt. Die Schraube 50 umfasst ein Außengewinde 53, einen Schraubenkopf 51 und ein Justiermittel 52, über welches die Schraube 50 gedreht werden kann, und ist mit dem Schraubenkopf 51 in einem an dem Außenprofil 10 befestigten Montagekopf 30 axial festgelegt. Das Außengewinde 53 der Schraube 50 steht ferner in Eingriff mit dem bei dem Innenprofil 20 bereitgestellten Innengewinde 21, 22, so dass eine Drehbewegung der Schraube 50 die Eingriffslänge zwischen dem Innenprofil 20 und dem Außenprofil 10 beeinflusst. Bei dem gezeigten Ausführungsbeispiel ist das Justiermittel 52 im Schraubenkopf 51 angeordnet und hat die Form eines Innensechskants.

Um die Bewegung des Innenprofils 20 in dem Außenprofil 10 zu erleichtern, kann die Wandstärke des Außenprofils zwischen den Kanten zum Inneren des Profils hin leicht abnehmen.

Die Schraube 50 umfasst ferner ein Haltemittel 54, dass bei einer vorgegebenen Position an der Schraube 50 befestigt ist, wobei die eingestellte Position gewährleistet, dass die Eingriffslänge zwischen den beiden Profilen nicht über ein minimal zulässiges Maß hinaus vermindert werden kann. Wird eine gewisse durch die Position des Haltemittels 54 an der Schraube 50 eingestellte minimale Eingriffslänge erreicht - bei maximalen Ausdehnung der Halterung in Längsrichtung - bildet das Haltemittel 54 einen Anschlag für das Innenprofil 20. Eine weitere Verminderung der Eingriffslänge ist dann nicht mehr möglich.

Bei einem Befestigungsbereich 11 des Außenprofils 10 ist der Montagekopf 30 an dem Außenprofil 10 befestigt. Diese Befestigung erfolgt über eine dem Fachmann bekannte Technik. Beispielsweise ist der Montagekopf 30 bei dem Befestigungsbereich 11 angenietet. Bei dem in Figur 1a gezeigten Ausführungsbeispiel ist der Schraubenkopf 51 axial in dem Montagekopf 30 festgelegt, und zwar zwischen zwei Stegen, die sich orthogonal zur Längsrichtung der Halterung erstrecken. Um auf die in dem Montagekopf 30 angeordnete Schraube 50 zugreifen zu können, weist der Montagekopf 30 zwei Öffnungen 36, 37 auf, welche nach Herstellung des Montagekopfes 30 in diesen eingebracht werden.

Der Montagekopf selber weist zwei Hauptbestandteile auf, nämlich einen Gelenkkopf 32 und eine Gelenkpfanne 33. Die Gelenkpfanne ist über dem Fachmann bekannte Mittel an dem Außenprofil 10 befestigt. Der Gelenkkopf 32 umfasst eine Gelenkkopfplatte 35 sowie zwei Gelenkkopf-Hohlkreiszylindersegmente 34, die in entsprechenden Ausnehmungen der Gelenkpfanne geführt sind. Eine detaillierte Beschreibung des Montagekopfes folgt bei den Figuren 2 - 5.

Figur 1b veranschaulicht eine schematische Schnittansicht eines zweiten Ausführungsbeispiels der erfindungsgemäßen Halterung, wobei auch diese Ansicht lediglich das allgemeine Prinzip der Erfindung verdeutlichen soll - Details der erfindungsgemäßen Halterung sind bei dieser Ansicht nur teilweise dargestellt. Die Schnittebene verläuft horizontal durch die Zentralachse der Halterung, so dass Figur 1b eine Draufsicht auf diese Schnittebene darstellt.

Das in Figur 1b schematisch dargestellte Ausführungsbeispiel entspricht in weiten Teilen dem bereits in Figur 1a beschriebenen, so dass nachfolgend primär auf die Bauteile, bzw. deren Anordnung in der Halterung selber, eingegangen wird, die sich von denen des ersten Ausführungsbeispiels unterscheiden.

Das Ausführungsbeispiel gemäß Figur 1b umfasst ebenfalls ein Außenprofil 10 sowie einen Befestigungsfuß 40, wobei der Befestigungsfuß 40 nicht einstückig mit dem Außenprofil 10, sondern als separates Bauteil ausgebildet ist. Die Halterung wird über (nicht gezeigte) Befestigungsmittel bei dem Befestigungsfuß 40 mit einem beliebeigen Untergrund verbunden. In dem Befestigungsfuß 40 ist eine Schraube 50 axial festgelegt und erstreckt sich von dem Befestigungsfuß 40 durch das Außenprofil 10 in einen Gewindebereich 21, 22 einen Innenprofils 20. Auch bei diesem Ausführungsbeispiel kann die Eingrifflänge zwischen dem Innenprofil 20 und dem Außenprofil 10 durch ein Drehen der Schraube 50 eingestellt werden, jedoch ist die Schaube 50 bei diesem Ausführungsbeispiel nicht im Montagekopf 30, sondern vielmehr im Befestigungsfuß 40 axial festgelegt. Der Montagekopf 30 ist bei einem Befestigungsbereich 23 des Innenprofils 20 an diesem befestigt, und weist zwei Öffnungen 36, 37 auf, durch welche auf ein Justiermittel 52 der Schraube 50 zugegriffen werden kann. Die Schraube 50 umfasst ferner ein Haltemittel 54, welches eine zu starke Verminderung der Eingriffslänge zwischen den Profilen, d.h. ein Herausdrehen des Innenprofils aus dem Außenprofil, verhindert. Der Montagekopf 30 umfasst auch bei diesem Beispiel einen Gelenkkopf 32 sowie eine Gelenkpfanne 33.

Bei den beiden in den Figuren 1a und 1b gezeigten Ausführungsbeispielen weist die Halterung lediglich ein Gelenk auf, und zwar bei dem Montagekopf 30. Bei den in den Figuren 1a und 1b gezeigten Ausführungsbeispielen ist der Montagekopf derart aufgebaut, dass der Gelenkkopf an dem Außenprofil festgelegt ist.

Die nachfolgenden Figuren beziehen sich auf ein Ausführungsbeispiel, bei dem sowohl der Montagekopf 30 als auch der Befestigungsfuß 40 ein Gelenk aufweisen, wobei die Figuren 2a und 2b Schnittansichten eines dritten Ausführungsbeispiels der erfindungsgemäßen Halterung zeigen. Figur 2a zeigt eine Schnittansicht durch den Befestigungsfuß 40. Da bei dem in Figur 2a gezeigten Ausführungsbeispiel die Bewegungsebenen der Gelenke einen Winkel von 90° zueinander aufweisen, ist der Montagekopf 30 nicht geschnitten dargestellt.

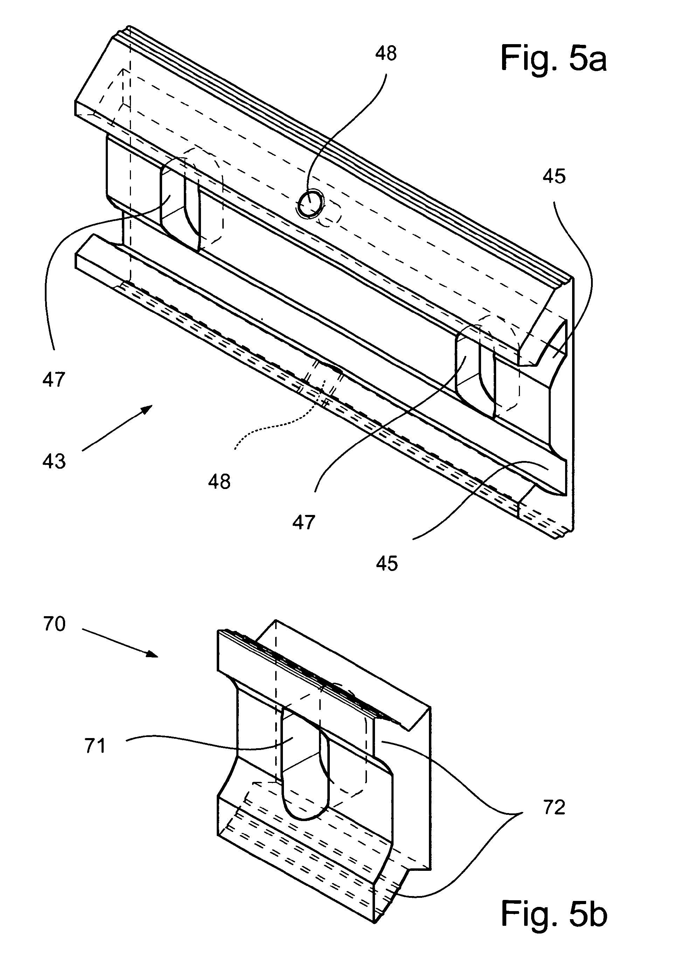

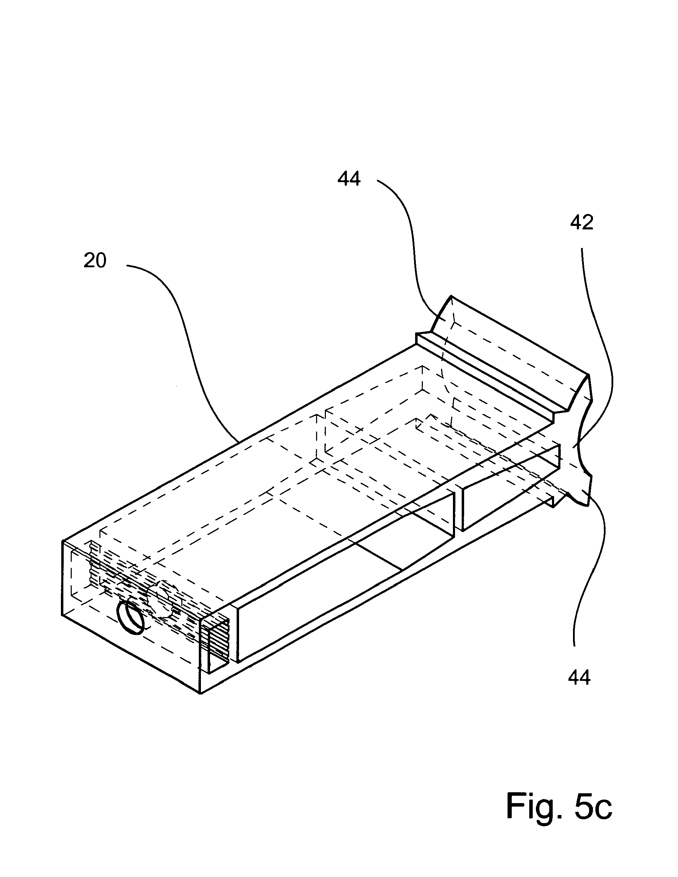

Beim dem gezeigten Ausführungsbeispiel ist das Innenprofil 20 einstückig mit dem Gelenkkopf 42 des Befestigungsfußes 40 ausgebildet. Das Bauteil ist als Ganzes im Strangguss-Verfahren herstellbar, da es keine Stege parallel zur Längsachse der Halterung aufweist. Der Gelenkkopf 42 des Befestigungsfußes 40 umfasst zwei Gelenkkopf-Hohlkreiszylindersegmente 44, die in eine entsprechende Ausnehmung der Gelenkpfanne 43 eingreifen und in dieser bewegbar sind. Die dem Untergrund zugewandten Gleitflächen der Hohlkreiszylindersegmente gehen ineinander über, bilden also eine durchgehende Kreiszylindersegmentfläche. Der Befestigungsfuß-Gelenkkopf 42 sowie die Befestigungsfuß-Gelenkpfanne 43 sind detaillierter in den Figuren 5a und 5c gezeigt, wobei bei Figur 5c der Gelenkkopf wieder einstückig mit dem Innenprofil 20 dargestellt ist.

Die in Figur 5a gezeigte Gelenkpfanne 43 ist als eine Schiene ausbildet, durch deren gesamte Länge sich zwei Ausnehmungen 45 mit jeweils zwei Gleitflächen erstrecken, in denen die Hohlkreiszylindersegmente 44 des Gelenkkopfes 42 geführt sind bzw. werden. Zur Montage wird der Gelenkkopf, d.h. die Hohlkreiszylindersegmente 44 bei einer der offenen Stirnflächen der Gelenkpfanne 43 in diese bis zu einer mittigen Position eingeschoben. Da die Hohlkreiszylindersegmente 44 nicht die gesamte Tiefe der Ausnehmungen 45 einnehmen, sondern bei jeder Ausnehmung ein Spalt 46 (siehe Figur 2a) verbleibt, kann der Gelenkkopf in der Pfanne bewegt werden, und zwar, bezogen auf die Figur 2a, nach oben und unten. Die Gelenkpfanne umfasst ferner zwei Öffnungen 48, über die der Gelenkkopf 42 bzw. die Gelenkkopf-Hohlkreiszylindersegmente 44 mit beispielsweise Madenschrauben fixiert werden kann bzw. können, sobald sich die Halterung in der richtigen Stellung befindet, d.h. der gewünschte Winkel bei dem Gelenk eingestellt ist.

Nachdem der Gelenkkopf 42 in die Gelenkpfanne 43 eingeführt ist, wird der Gelenkkopf gegen ein seitliches Verrutschen in der Schiene gesichert, und zwar indem bei jeder Seite ein Einlageelement 70 in die Schiene eingeführt ist. Die Einlageelemente 70 weisen ebenfalls zwei Hohlkreiszylindersegmente 72 auf, die jedoch im Unterschied zu den Hohlkreiszylindersegmenten 44 des Gelenkkopfes 42 die Ausnehmungen 45 der Gelenkpfanne 43 vollständig ausfüllen, so dass keine Bewegung der Einlagen möglich ist.

Die Einlageelemente 70 weisen eine Öffnung 71 auf, die bei eingeschobenen Einlageelementen über entsprechenden Öffnungen 47 in der Befestigungsschiene bzw. der Gelenkpfanne 43 angeordnet sind. Zur Befestigung der Halterung an einem Untergrund werden entsprechende Befestigungsmittel durch die Öffnungen geführt und in einem Untergrund verankert. Zur Vermeidung eines Wärmetransportes über die Befestigungsmittel können die Einlageelemente 70 aus einem Material mit geringer Wärmeleitfähigkeit gefertigt sein, beispielsweise einem Kunststoff, wobei darauf zu achten ist, dass der Kunststoff dazu eine ausreichende Härte aufweist.

Figur 2b zeigt eine Schnittansicht durch den Montagekopf 30. Da bei dem gezeigten Ausführungsbeispiel sind die Bewegungsebenen der Gelenke zur Veranschaulichung parallel, und daher sind sowohl Befestigungsfuß als auch Montagekopf geschnitten dargestellt.

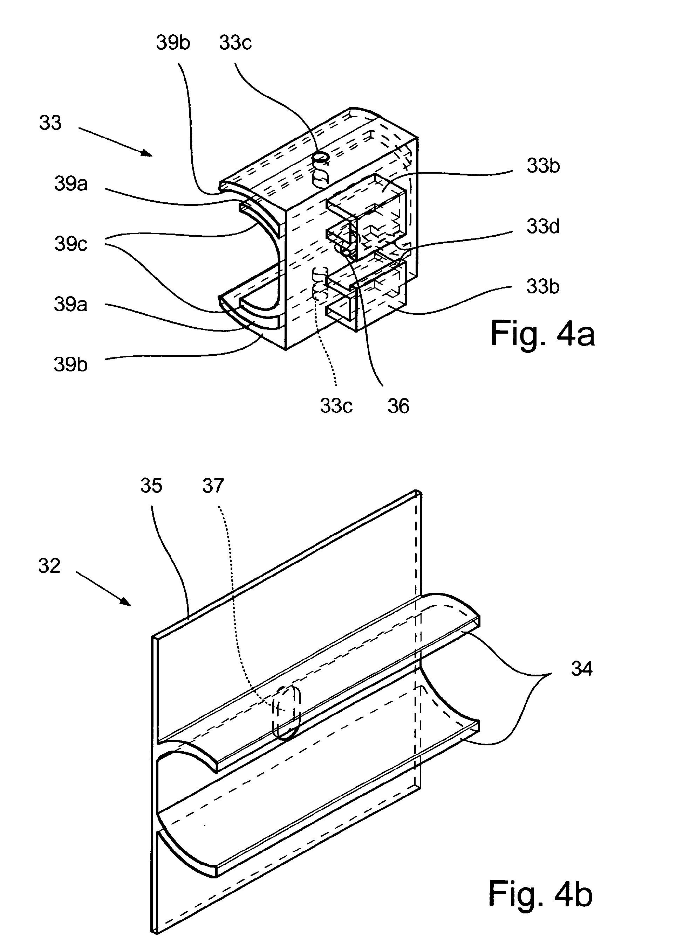

Der Montagekopf 30 umfasst eine Gelenkpfanne 33 und einen Gelenkkopf 32. Eine detaillierte Ansicht der Gelenkpfanne 33 sowie des Gelenkkopfes 32 ist in den Figuren 4a und 4b dargestellt. Die in Figur 4a gezeigte Gelenkpfanne ist im Wesentlichen "C"-förmig, wobei die beiden Schenkel des "C" doppelwandig ausgebildet sind. Die beiden Wände 39b, 39c definieren eine Ausnehmung 39a in Form eines Hohlkreiszylindersegments zwischen sich, und die beiden gegenüberliegenden Flächen der Wände bilden Gleitflächen für die Hohlkreiszylindersegmente 34 des Gelenkkopfs 42. Zur Montage können die Hohlkreiszylindersegmente 34 des Gelenkkopfes 32 in die Ausnehmungen 39a eingeführt werden. Da die beiden Hohlkreiszylindersegmente 34 des Gelenkkopfes die Ausnehmungen nicht vollständig ausfüllen, also bei 0°-Stellung des Gelenkes Freiräume 38 verbleiben, kann der Gelenkkopf in der Gelenkpfanne bewegt werden (siehe dazu Figur 2b). Um das Gelenk bei einer bestimmten Winkelstellung zu fixieren, werden die Hohlkreiszylindersegmente 34 in den Ausnehmungen 39a fixiert, indem beispielsweise Madenschrauben durch Öffnungen 33c auf die Segmente einwirken. Die Gelenkpfanne 33 weist ferner eine Öffnung 36 auf, über welche von vorne auf das Justiermittel 52 der Schraube 50 zugegriffen werden kann.

An der der Halterung zugewandten Seite bzw. Fläche der Gelenkpfanne sind zwei Ansätze 33b mit einem U-förmigen Profil angeordnet. Über die Ansätze 33b ist die Gelenkpfanne in dem Außenprofil festgelegt. Beispielsweise kann das Außenprofil 20 mit zumindest einem der Ansätze 33b vernietet sein.

Die Ansätze können entweder an der Unterseite der Gelenkpfanne befestigt sein (beispielsweise angeschweißt), oder die Ansätze 33b sind an die Gelenkpfanne angeformt, d.h. einstückig mit dieser ausgebildet. Eine solche Ausführung der Gelenkpfanne 33 hat den Vorteil, dass das gesamte Bauteil im Strangguss-Verfahren hergestellt werden kann. Bei dem in Figur 4a gezeigten Ausführungsbeispiel muss bei einstückiger Ausführung dann nach der Fertigung überschüssiges Material entfernt werden. Jedoch kann die Gelenkpfanne auch so ausgeführt sein, dass die Breite der Ansätze 33b der Gesamtbreite der Gelenkpfanne 33 entspricht, so dass keine Materialabtragung nach Fertigung notwendig ist. In einem solchen Fall steht die Gelenkpfanne bei zwei Seiten leicht über das Außenprofil

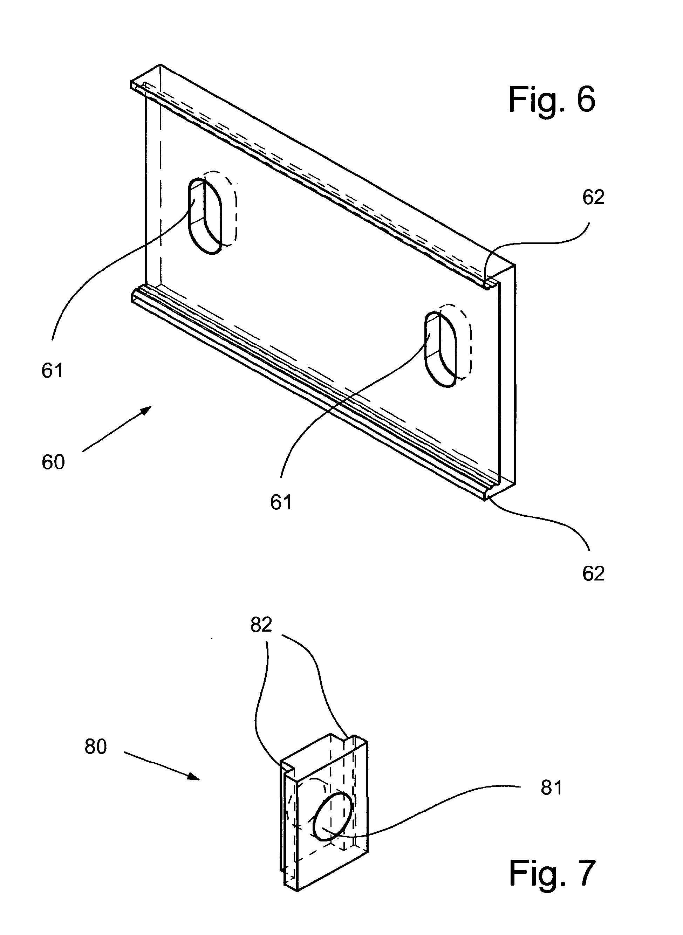

Bei dem gezeigten Ausführungsbeispiel sind die Mittel zum Einstellen und Fixieren der Länge des Eingriffs des Innenprofils 20 in das Außenprofil 10 u.a. durch eine Schraube 50 bereitgestellt, wie dies bereits weiter oben beschrieben wurde. Diese Schraube 50 muss axial gegenüber dem Außenprofil 10 festgelegt sein. Im vorliegenden Ausführungsbeispiel wird dies realisiert, indem die Schraube in der Gelenkpfanne des Montagekopfes, der gegenüber dem Außenprofil dem Außenprofil 10 axial festgelegt ist, axial fixiert ist. Die Schraube ist dazu durch eine Öffnung 81 einer Befestigungseinlage 80 geführt, die über zwei Vorsprünge 81 auf entsprechenden Vorsprüngen 33d der Ansätze 33b aufliegt (für eine detaillierte Darstellung der Einlage 80 wird auf Figur 7 verwiesen). Zur Montage der Halterung wird die Schraube 50 durch die Öffnung 81 geführt, und die Befestigungseinlage 80 auf die Vorsprünge 33d der Ansätze 33b der Gelenkpfanne 33 geschoben. Die Schraube kann dann in ein entsprechendes Gewinde 22, 21 eingedreht werden, wobei die Eindrehtiefe die Länge des Eingriffs des Außenprofils 10 in das Innenprofil 20 bedingt.

Der in Figur 4b gezeigte Gelenkkopf 32 umfasst eine Gelenkkopfplatte 35 mit einem Langloch 37, über welches das Justiermittel 52 der Schraube 50 erreichbar ist. An der Gelenkkopfplatte 35 sind zwei Hohlkreiszylindersegmente 34 angeformt, die derart ausgebildet sind, dass sie die entsprechenden Ausnehmungen 39a der Gelenkpfanne nicht vollständig ausfüllen. An der der Gelenkpfanne abgewandten Fläche bzw. Seite des Gelenkkopfes werden entsprechende Elemente, beispielsweise eine Fassade, oder eine Unterkonstruktion für eine Fassade, befestigt. Wie dies geschehen kann, ist weiter unten beschrieben.

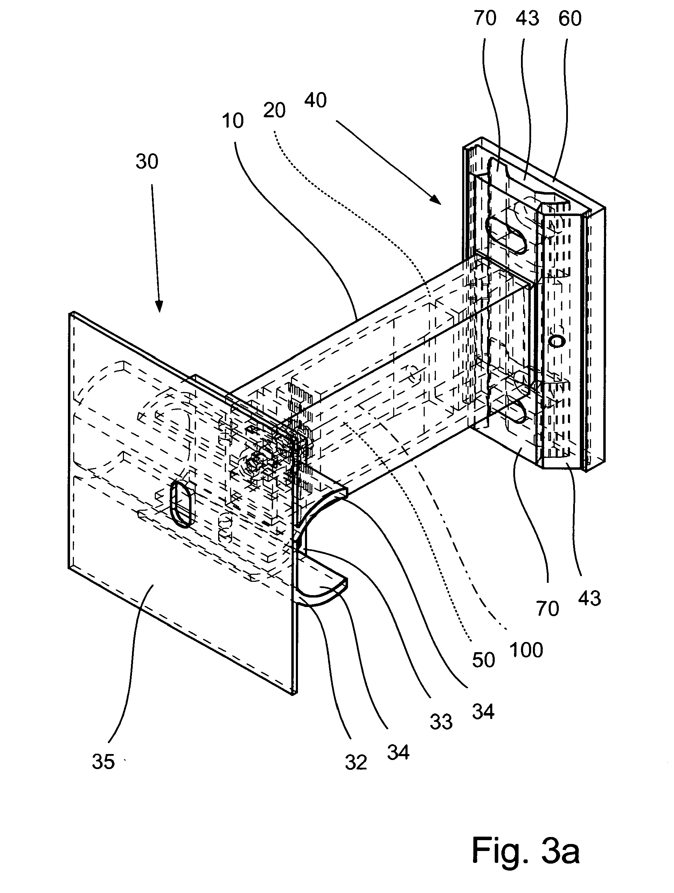

Figur 3a zeigt eine Seitenansicht des in den Figuren 2a und 2b dargestellten dritten Ausführungsbeispiels. Bei dieser Ansicht schließen die beiden Bewegungsebenen der Gelenke einen Winkel von 90° ein. Ferner ist bei dieser Darstellung die Fixierung des Gelenkkopfes 42 des Befestigungsfußes 40 in der Gelenkpfanne 43 des Befestigungsfußes 40 zu erkennen. Der Gelenkkopf 42 ist oben und unten von je einem Einlageelement 70 umgeben, die den Gelenkkopf in der Mitte der Gelenkpfanne halten. Die in Figur 3a gezeigte Ausrichtung der Halterung, und insbesondere des Befestigungsfußes, ist bevorzugt, da bei senkrechter Anordnung der als Schiene ausgebildeten Gelenkpfanne deutlich mehr Kräfte aufgenommen werden, als wäre diese horizontal angeordnet. An der dem Untergrund zugewandten Fläche der Gelenkpfanne 43 ist zur Unterbindung eines Wärmetransportes zwischen dem Untergrund und der Halterung noch ein Isoliermittel 60 angeordnet (siehe dazu auch Figur 7). Bei dem gezeigten Ausführungsbeispiel weist das Isoliermittel an seinen langen Kanten zwei kurze Schenkel 62 mit Führungsmitteln auf, über die das Isoliermittel auf entsprechende Führungsmittel an der Gelenkpfanne 43 aufgeschoben ist. Das Isoliermittel weist ferner zwei Öffnungen 61 auf, durch welche (nicht gezeigte) Befestigungsmittel geführt sind bzw. werden.

Figur 2c zeigt eine Schnittansicht eines vierten Ausführungsbeispiel der erfindungsgemäßen Halterung. Auch bei diesem Ausführungsbeispiel sind die Bewegungsebenen der Gelenke um 90° zueinander versetzt, so dass lediglich der Montagekopf 300 geschnitten dargestellt ist. Das vierte Ausführungsbeispiel unterscheidet sich lediglich im Hinblick auf den Montagekopf von dem zweiten und dem dritten Ausführungsbeispiel, so dass lediglich auf den Montagekopf 300 näher eingegangen wird.

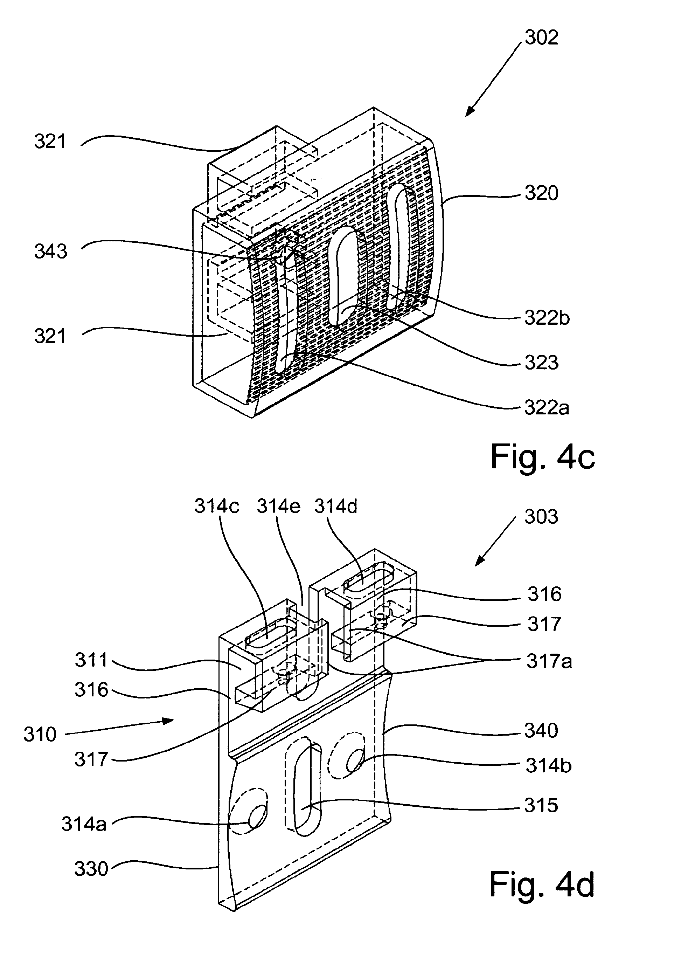

Der Montagekopf umfasst wieder einen Gelenkkopf 302 und eine Gelenkpfanne 303, wobei im Unterschied zu den oben beschriebenen Ausführungsbeispielen der Gelenkkopf an dem Außenprofil 10 festgelegt ist. Der detaillierter in Figur 4c gezeigte Gelenkkopf ist im Wesentlichen im Profil "D"-förmig ausgebildet, wobei die Rundung als Gleitfläche 320 ausgebildet ist, an welcher die Gleitfläche 340 der Gelenkpfanne 303 zur Anlage kommt, wobei die beiden Gleitflächen bei Einstellung bzw. Verstellung des Gelenks gegeneinander verschoben werden.

Die Gleitfläche weist drei Öffnungen 322a, 322b, 323 auf. Die zentrale Öffnung 323 ist als Langloch ausgebildet, über welches auf eine Öffnung 343 in der der Gleitfläche abgewandten Seite des D-förmigen Profils zugegriffen werden kann. Über die Öffnung 343 kann auf die Stellmittel der Schraube 50 zugegriffen werden.

Die beiden äußeren Öffnungen 322a, 322b sind ebenfalls als Langlöcher ausgebildet, und über diese Öffnungen wird die Gelenkpfanne 303 an dem Gelenkkopf 302 festgelegt. Die Ausbildung als Langloch sorgt dafür, dass die Gelenkpfanne gegenüber dem Gelenkkopf verschoben bzw. verschwenkt werden kann und trotzdem eine Festlegung möglich ist. Mit anderen Worten, je nach Winkelstellung des Gelenks sind entsprechende (nicht dargestellte) Feststellmittel tiefer oder höher in den Öffnungen 322a, 322b angeordnet.

Bei der der Gleitfläche 320 abgewandten Seite des Gelenkkopfes, also an der der Halterung zugewandten Seite, sind zwei Ansätze 321 mit einem U-förmigen Profil angeformt, über welche der Gelenkkopf 302 an dem Außenprofil 10 befestigt ist. Für eine detaillierte Beschreibung der Funktion und Ausgestaltung der Ansätze wird auf die Beschreibung zu 4a verwiesen.

Die dem Gelenkkopf 302 zugeordnete Gelenkpfanne 303 ist detaillierter in Figur 4d dargestellt. Die Gelenkpfanne weist eine der Halterung abgewandte Seite 330 auf, an welcher zu befestigende Elemente anliegen bzw. an welcher die Elemente befestigt werden können. Der in der Zeichnung untere Abschnitt der Gelenkpfanne, der eigentliche Gelenkabschnitt, weist eine Gleitfläche 340 auf, die mit der Gleitfläche 320 des Gelenkkopfes zusammenwirkt. Der untere Abschnitt der Gelenkpfanne 303 weist ferner drei Öffnungen 314a, 314b, 315 auf, wobei die mittlere der drei Öffnungen, die Öffnung 315, als Langloch ausgebildet ist, über welches, durch die entsprechenden Öffnungen 323, 343 des Gelenkkopfes hinweg, auf das Stellmittel der Schraube 50 zugegriffen werden kann. Über die beiden Öffnungen 314a, 314b wird die Gelenkpfanne in gewünschter Stellung den dem Gelenkkopf fixiert, indem (nicht gezeigte) Feststellmittel durch die Öffnungen 314a, 314b in der Gelenkpfanne und dem Gelenkkopf 322a, 322b geführt sind und bei entsprechender Ausrichtung des Gelenks justiert werden.

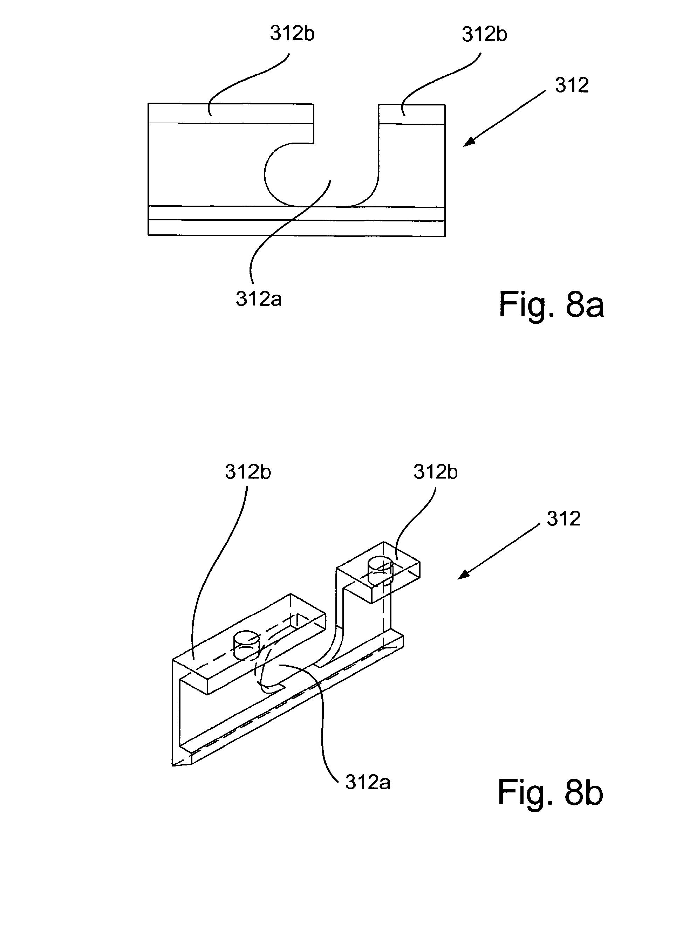

Im oberen Abschnitt weist die Gelenkpfanne einen Sicherungsabschnitt 310 mit einer Ausnehmung bzw. einem Hohlraum 311 auf, in der ein (nicht in Figur 4d gezeigtes) Sicherungselement 312 verschiebbar gelagert ist. Die Ausnehmung bzw. der Hohlraum ist durch zwei im Wesentlichen U-fömige Ansätze 317 gebildet, wobei die der Gleitfläche 340 zugewandten Schenkel der Ansätze jeweils einen Spalt 316 aufweisen, durch den ein Teil des Sicherungselements 312 geführt ist. Die der Gleitfläche 340 abgewandten Schenkel der Ansätze weisen jeweils eine Öffnung 314c, 314d auf, durch welche entsprechende (in Figur 4d nicht gezeigte) Stellmittel 313 geführt sind, durch welche das Sicherungsmittel fixiert und in der Höhe verstellt werden kann. Das Sicherungselement 312 weist zwei Schenkel 312b auf, die auf den unterbrochenen Schenkeln der Ansätze 317 gleiten können (für eine detaillierte Darstellung des Sicherungselementes siehe Figuren 8a und 8b).

Der Sicherungsabschnitt 310 ist bei dem gezeigten Ausführungsbeispiel einstückig mit dem Rest der Gelenkpfanne 303 ausgebildet. Dies ermöglicht eine Herstellung der Gelenkpfanne einschließlich Sicherungsabschnitt im Strangguss-Verfahren, wobei notwendige Spalte und Öffnungen nach der Vereinzelung des Profils zu den Gelenkpfannen eingebracht werden können bzw. überschüssiges Material nach dem Gießen abgetragen werden kann. Die das Sicherungselement 312 aufnehmende Ausnehmung 311 muss nicht nachträglich eingebracht werden, sondern wird bereits bei dem Stranggießen gebildet, da die Ausnehmung parallel zu der Längsachse verläuft. Bei anderen Ausführungsbeispielen kann der Sicherungsabschnitt auch separat hergestellt und anschließend an der Gelenkpfanne 303 befestigt werden. Es ist auch denkbar, lediglich die Ansätze 317 nach dem Stranggießen der Gelenkpfanne 303 an dieser zu befestigen.

Eine Höhenverstellbarkeit des Sicherungselements 312 kann dadurch erreicht werden, dass die in dem Hohlraum bzw. der Ausnehmung 311 geführten Schenkel 312b des Sicherungselementes eine geringere Höhe als die Ausnehmung 311 aufweisen und so in dieser über die Stellmittel 313 höhenverstellbar sind.

Zur Sicherung der Elemente der an der Halterung werden entsprechende Befestigungsmittel an den Elementen von oben in eine Öffnung bzw. einen Spalt 314e im Sicherungsabschnitt 310 eingeführt. Der Spalt ist zum einen durch die vordere Fläche des Sicherungsabschnittes und zum anderen durch Vorsprünge 317a an den Ansätzen 317 begrenzt.

Bei der Einführung der Befestigungsmittel ist das Sicherungselement 312a derart in der Ausnehmung 311 angeordnet, dass eine "L"-förmige Öffnung 312 in dem Sicherungselement so angeordnet ist, dass das Befestigungsmittel auch in diese Öffnung eingeführt wird. Die Befestigungsmittel der Halterung sind dann axial in Bezug auf die Halterung festgelegt, jedoch können diese nach oben aus dem Sicherungsabschnitt entfernt werden. Um dies zu vermeiden, wird das Sicherungselement entsprechend auf den Schenkeln der Ansätze verschoben, so dass die Befestigungsmittel in die L-förmige Öffnung hineinwandern und schließlich von dieser eine Entfernung nach oben verhindert ist.

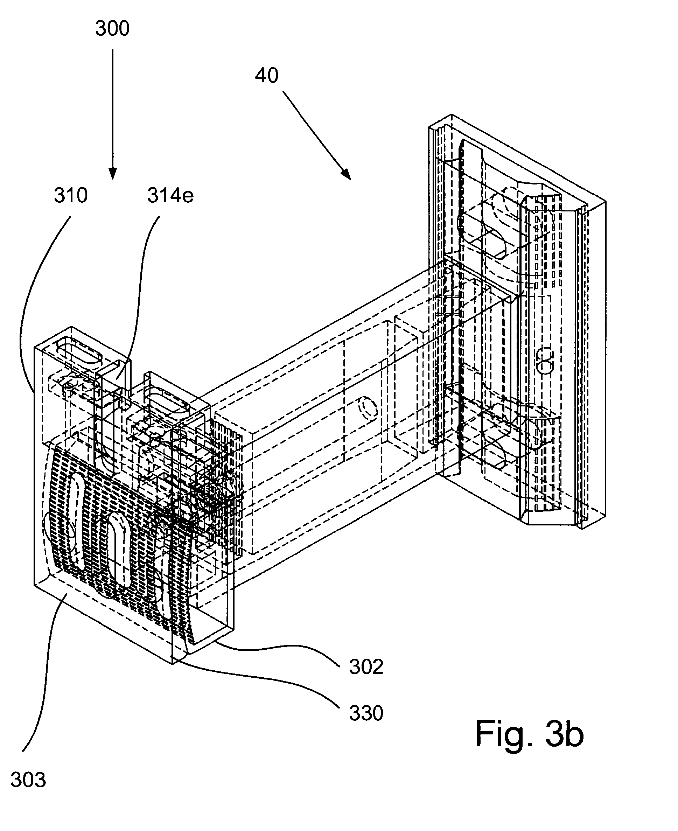

Figur 3b schließlich zeigt das vierte Ausführungsbeispiel in einer Seitenansicht. Bei dieser Darstellung ist gegenüber der Figur 3a lediglich der Montagekopf variiert - die übrigen Bauteile sind entsprechend.

Figur 3b zeigt die bevorzugte Anordnung der entsprechenden Halterung, d.h. der Montagekopf ist vorzugsweise derart angeordnet, dass der Sicherungsabschnitt nach oben gerichtet ist. Auf diese Weise ist es möglich, mit der Sicherungsfunktion die Höhenverstellbarkeit zu kombinieren.

Die vorliegende Erfindung wurde unter Bezugnahme auf vier Ausführungsbeispiele beschrieben, wobei bei den einzelnen Beispielen zum Teil verschiedene Merkmale der Erfindung besonders detailliert beschrieben wurden.

## Patentansprüche

1. Halterung für Verkleidungselemente bzw. eine Verkleidungselemente-Unterkonstruktion mit
einem Innenprofil (20), das drehfest, radial fixiert und axial verschiebbar gegenüber einem Außenprofil (10) in diesem gelagert ist,
wobei eines der Profile (10, 20) einen Befestigungsfuß (40) und das andere Profil (10, 20) einen Montagekopf (30, 300) aufweist, wobei sich die ineinandergreifenden Profile (10, 20) in axialer Richtung (100) zwischen dem Befestigungsfuß (40) und dem Montagekopf (30, 300) derart erstrecken, dass der Abstand zwischen dem Befestigungsfuß (40) und dem Montagekopf (30, 300) durch die Länge des Eingriffs des Innenprofils in das Außenprofil bestimmt und die Länge des Eingriffs einstellbar ist,
wobei mit dem Innenprofil (20) und mit dem Außenprofil (10) Mittel zum Einstellen und Fixieren der Länge des Eingriffs des Innenprofils (20) in das Außenprofil (10) verbunden sind,
**dadurch gekennzeichnet, dass**
der Montagekopf (30, 300) oder der Befestigungsfuß (40) ein in einer zur axialen Richtung nicht senkrechten Ebene bewegbares Gelenk umfasst, das einen Gelenkkopf (32, 42, 302) und eine Gelenkpfanne (33, 43, 303) aufweist, wobei der Gelenkkopf (32, 42, 302) und/oder die Gelenkpfanne (33, 43, 303) zumindest eine Gleitfläche in Form eines Kreiszylindersegmentes aufweist.

2. Halterung nach Anspruch 1, **dadurch gekennzeichnet, dass** der Montagekopf (30, 300) und der Befestigungsfuß (40) ein in einer Ebene bewegbares Gelenk umfassen, das jeweils einen Gelenkkopf (32, 42, 302) und eine Gelenkpfanne (33, 43, 303) aufweist, wobei die Gelenkköpfe (32, 42, 302) und/oder die Gelenkpfannen (33, 43, 303) zumindest eine Gleitfläche in Form eines Kreiszylindersegments aufweisen.

3. Halterung nach einem der Ansprüche 1 oder 2, **dadurch gekennzeichnet, dass** der Gelenkkopf (32, 42, 302) des oder wenigstens eines Gelenks und die Gelenkpfanne (33, 43, 303) des oder wenigstens eines Gelenks eine Gleitfläche in Form eines Kreiszylindersegments aufweisen, wobei die Längsdrehachsen der den Kreiszylindersegmenten entsprechenden Kreiszylinder zusammenfallen und vorzugsweise die Längsachse der Halterung schneiden.

4. Halterung nach Anspruch 1 oder 2, **dadurch gekennzeichnet, dass** der Gelenkkopf (32, 42) des oder wenigstens eines Gelenks ein Hohlkreiszylindersegment (34, 44) mit einer inneren und einer äußeren Gleitfläche aufweist.

5. Halterung nach Anspruch 4, **dadurch gekennzeichnet, dass** die Längsdrehachse des dem Hohlkreiszylindersegment (34, 44) entsprechenden Hohlkreiszylinders die zentrale Längsachse der Halterung schneidet.

6. Halterung nach einem der Ansprüche 1 oder 2, **dadurch gekennzeichnet, dass** der Gelenkkopf (32, 42) des oder wenigstens eines Gelenks zwei Hohlkreiszylindersegmenten (34, 44) aufweist, die in einem definierten Abstand derart zueinander an einer entsprechenden Gelenkkopfplatte (35) angeordnet sind, dass die Längsdrehachse des zugehörigen Hohlkreiszylinders die zentrale Längsachse der Halterung schneidet.

7. Halterung nach einem der Ansprüche 2 bis 6, **dadurch gekennzeichnet, dass** die beiden Bewegungsebenen der Gelenke einen Winkel von 90° zueinander aufweisen.

8. Halterung nach einem der Ansprüche 1 bis 7, **dadurch gekennzeichnet, dass** die Mittel zum Einstellen und Fixieren der Länge des Eingriffs des Innenprofils (20) in das Außenprofil (10) derart realisier sind, dass
das Innenprofil (20) ein sich in axialer Richtung erstreckendes Innengewinde (21) oder ein ein solches Innengewinde aufweisendes, axial und drehfest festgelegtes Bauteil (22) aufweist,
wobei sich eine Schraube (50) mit einem Schraubenkopf (51), einem Justiermittel (52) und einem in das Innengewinde (21) eingreifenden Außengewinde (53) durch zumindest einen Teil des Außenprofils (10) und des Innenprofils (20) in axialer Richtung erstreckt, und
wobei der Schraubenkopf (51) gegenüber dem Außenprofil (10) axial festgelegt, aber drehbar ist, und wobei auf das Justiermittel (52) der Schraube (50) zum Einstellen der Länge des Eingriffs des Innenprofils (20) in das Außenprofil (10) zugegriffen werden kann.

9. Halterung nach einem der Ansprüchen 1 bis 8, **dadurch gekennzeichnet, dass** das Innenprofil (20) den Befestigungsfuß (40) aufweist und der Montagekopf (30, 300) an dem Außenprofil (10) befestigt ist, und dass der Gelenkkopf (42) des Befestigungsfußes (40) einstückig mit dem Innenprofil (20) ausgebildet ist.

10. Halterung nach Anspruch 9, **dadurch gekennzeichnet, dass** das Außenprofil (10), das Innenprofil (20) einschließlich Gelenkkopf (42), die Gelenkpfanne des Befestigungsfußes (43) sowie der Gelenkkopf (32, 302) und die Gelenkpfanne (33, 303) des Montagekopfes (30, 300) jeweils aus Endlosprofilen geschnittene Abschnitte sind, wobei deren Schnittebenen parallel zur Axialrichtung der Halterung und die Schnittebene des Außenprofils (10) quer zur Axialrichtung der Halterung verlaufen.

11. Halterung nach einem der Ansprüche 1 bis 10, wobei der Montagekopf (30, 300), das Außen- und das Innenprofil (10, 20) sowie der Befestigungsfuß (40) aus Aluminium oder einer Aluminiumlegierung gefertigt sind.

12. Halterung nach einem der Ansprüche 1 bis 11, **dadurch gekennzeichnet, dass** an der Gelenkpfanne des Befestigungsfußes (40) ein Isolationsmittel (60) derart angeordnet ist, dass eine thermische Isolation zwischen einer Bodenfläche der Gelenkpfanne des Befestigungsfußes (40) und einem Untergrund bereitgestellt ist.

13. Halterung nach einem der Ansprüche 1 bis 12, **dadurch gekennzeichnet, dass** das die Gelenkpfanne (303) des Montagekopfes (300) oder der Gelenkkopf (32) des Montagekopfes (30) einen Sicherungsabschnitt (310) aufweist, über welchen zu befestigende Elemente an der Halterung gesichert werden können, wobei der Sicherungsabschnitt (310) derart an der Gelenkpfanne (303) bzw. dem Gelenkkopf (32) angeordnet ist, dass die Drehbarkeit des Gelenkpfanne (303) bzw. des Gelenkkopfes (32) gewährleistet ist.

14. Halterung nach Anspruch 13, **dadurch gekennzeichnet, dass** der Sicherungsabschnitt (310) eine Ausnehmung (311) aufweist, in welcher ein Sicherungselement (312) verschiebbar und über entsprechende Stellmittel (313) justierbar angeordnet ist.

15. Halterung nach Anspruch 14, **dadurch gekennzeichnet, dass** das Sicherungselement (312) in der Ausnehmung (311) über die Stellmittel (313) höhenverstellbar ist.

## Claims

1. A mounting for cladding elements or a substrate for cladding elements including an inner profile (20), which is mounted in an outer profile (10) to be rotationally stationary, radially fixed and axially movable with respect to it, wherein one of the profiles (10, 20) has a fastening foot (40) and the other profile (10, 20) has a mounting head (30, 300), wherein the profiles (10, 20) engaging in one another extend in the axial direction (100) between the fastening foot (40) and the mounting head (30, 300) such that the distance between the fastening foot (40) and the mounting head (30, 300) is determined by the length of the engagement of the inner profile in the outer profile and the length of the engagement is adjustable, wherein means for adjusting and fixing the length of the engagement of the inner profile (20) in the outer profile (10) are connected to the inner profile (20) and to the outer profile (10), **characterised in that** the mounting head (30, 300) or the fastening foot (40) includes a joint, which is movable in a plane which is not perpendicular to the axial direction and has a joint head (32, 42, 302) and a joint socket (33, 43, 303), wherein the joint head (32, 42, 302) and/or the joint socket (33, 43, 303) has at least one sliding surface in the form of a circular cylindrical segment.

2. A mounting as claimed in claim 1, **characterised in that** the mounting head (30, 300) and the fastening foot (40) include a joint, which is movable in a plane and has a respective joint head (32, 42, 302) and a joint socket (33, 43, 303), wherein the joint heads (32, 42, 302) and/or the joint sockets (33, 43, 303) have at least one sliding surface in the form of a circular cylindrical segment.

3. A mounting as claimed in one of claims 1 or 2, **characterised in that** the joint head (32, 42, 302) of the or at least one joint and the joint socket (33, 43, 303) of the or at least one joint have a sliding surface in the form of a circular cylindrical segment, wherein the longitudinal axis of rotation of the circular cylinders corresponding to the circular cylindrical segments coincide and preferably intersect the longitudinal axis of the mounting.

4. A mounting as claimed in claim 1 or 2, **characterised in that** the joint head (32, 42) of the or at least one joint has a hollow circular cylindrical segment (34, 44) with an inner and an outer sliding surface.

5. A mounting as claimed in claim 4, **characterised in that** the longitudinal axis of rotation of the hollow circular cylinder corresponding to the hollow circular cylindrical segment (34, 44) intersects the central longitudinal axis of the mounting.

6. A mounting as claimed in one of claims 1 or 2, **characterised in that** the joint head (32, 42) of the or at least one joint has two hollow circular cylindrical segments (34, 44), which are arranged at a defined distance from one another on a corresponding joint head plate (35) such that the longitudinal axis of rotation of the associated hollow circular cylinder intersects the central longitudinal axis of the mounting.

7. A mounting as claimed in one of claims 2 to 6, **characterised in that** the two planes of movement of the joints have an angle of 90° to one another.

8. A mounting as claimed in one of claims 1 to 7, **characterised in that** the means for adjusting and fixing the length of the engagement of the inner profile (20) in the outer profile (10) are implemented such that the inner profile (20) has an internal screw thread (21) extending in the axial direction or a component (22), which is axially and rotationally fixed and affords such an internal screw thread, wherein a screw (20) with a screw head (51), an adjustment means (52) and an external screw thread (53) engaging in the internal screw thread (21) extends in the axial direction through at least a proportion of the outer profile (10) and inner profile (20), and wherein the screw head (51) is axially fixed but rotatable with respect to the outer profile (10) and wherein the adjustment means (52) of the screw (50) for adjusting the length of the engagement of the inner profile (20) in the outer profile (10) is accessible.

9. A mounting as claimed in one of claims 1 to 8, **characterised in that** the inner profile (20) has the fastening foot (40) and the mounting head (30, 300) is fastened to the outer profile (10) and that the joint head (42) of the fastening foot (40) is formed integrally with the inner profile (20).

10. A mounting as claimed in claim 9, **characterised in that** the outer profile (10), the inner profile (20) including joint head (42), the joint socket of the fastening foot (43) and the joint head (32, 302) and the joint socket (33, 303) of the mounting head (30, 300) are each sections cut from endless profiles, wherein their cut planes extend parallel to the axial direction of the mounting and the cut plane of the outer profile (10) extends transversely to the axial direction of the mounting.

11. A mounting as claimed in one of claims 1 to 10, wherein the mounting head (30, 300), the outer and the inner profile (10, 20) and the fastening foot (40) are made of aluminium or an aluminium alloy.

12. A mounting as claimed in one of claims 1 to 11, **characterised in that** an insulating means (60) is arranged on the joint socket of the fastening foot (40) such that thermal insulation is provided between a base surface of the joint socket of the fastening foot (40) and a substrate.

13. A mounting as claimed in one of claims 1 to 12, **characterised in that** the joint socket (303) of the mounting head (300) or the joint head (32) of the mounting head (30) has a securing section (310), by means of which elements to be fastened can be secured to the mounting, wherein the securing section (310) is arranged on the joint socket (303) or the joint head (32) such that the rotationability of the joint socket (303) or the joint head (32) is ensured.

14. A mounting as claimed in claim 13, **characterised in that** the securing section (310) has an opening (311), in which a securing element (312) is arranged so as to be movable and to be adjustable by means of corresponding positioning means (313).

15. A mounting as claimed in claim 14, **characterised in that** the securing element (312) is vertically movable in the opening (311) by means of the positioning means (313).

## Revendications

1. Fixation pour éléments d'habillage ou une sous-structure d'éléments d'habillage, comprenant :
un profilé interne (20), qui est monté solidaire en rotation, fixé radialement et déplaçable axialement par rapport à un profilé externe (10) dans celui-ci,
dans laquelle l'un des profilés (10, 20) présente un pied de fixation (40) et l'autre profilé (10, 20) une tête de montage (30, 300), dans laquelle les profilés (10, 20) s'emboîtant l'un dans l'autre s'étendent dans la direction axiale (100) entre le pied de fixation (40) et la tête de montage (30, 300) de sorte que la distance entrelepieddefixation (40)etlatêtedemontage (30, 300 soit déterminée par la longueur de l'engagement du profilé interne dans le profilé externe et que la longueur de l'engagement soit réglable,
dans laquelle des moyens pour régler et fixer la longueur de l'engagement du profilé interne (20) dansleprofilé externe (10) sont raccordés au profilé interne (20) et au profilé externe (10),
**caractérisée en ce que**
la tête de montage (30, 300) ou le pied de fixation (40) comprend une articulation déplaçable dans un plan non perpendiculaire à la direction axiale, laquelle articulation présente une tête articulée (32, 42, 302) et un coussinet à rotule (33, 43, 303), la tête articulée (32, 42, 302) et/ou le coussinet à rotule (33, 43, 303) présentant au moins une surface de glissement sous la forme d'un segment de cylindre à base circulaire.

2. Fixation selon la revendication 1, **caractérisée en ce que** la tête de montage (30, 300) et le pied de fixation (40) comprennent une articulation déplaçable dans un plan et qui présente respectivement une tête articulée (32, 42, 302) et un coussinet à rotule (33, 43, 303), dans laquelle les têtes articulées (32, 42, 302) et/ou les coussinets à rotule (33, 43, 303) présentent au moins une surface de glissement sous la forme d'un segment de cylindre à base circulaire.

3. Fixation selon l'une quelconque des revendications 1 ou 2, **caractérisée en ce que** la tête articulée (32, 42, 302) de la ou au moins d'une articulation et le coussinet à rotule (33, 43, 303) de la ou au moins d'une articulation présentent une surface de glissement sous la forme d'un segment de cylindre à base circulaire, dans laquelle les axes de rotation longitudinaux des cylindres à base circulaire correspondant aux segments de cylindre à base circulaire coïncident et coupent de préférence l'axe longitudinal de la fixation.

4. Fixation selon al revendication 1 ou 2, **caractérisée en ce que** la tête articulée (32, 42) de la ou au moins d'une articulation présente un segment de cylindre creux à base circulaire (34, 44) avec une surface de glissement interne et une surface de glissement externe.

5. Fixation selon la revendication 4, **caractérisée en ce que** l'axe de rotation longitudinal du cylindre creux à base circulaire correspondant au segment de cylindre creux à base circulaire (34, 44) coupe l'axe longitudinal central de la fixation.

6. Fixation selon l'une quelconque des revendications 1 ou 2, **caractérisée en ce que** la tête articulée (32, 42) de la ou au moins d'une articulation présente deux segments de cylindre creux à base circulaire (34, 44), qui sont agencés à une distance définie l'un de l'autre sur une plaque de tête articulée (35) correspondante de sorte que l'axe de rotation longitudinal du cylindre creux à base circulaire pertinent coupe l'axe longitudinal central de la fixation.

7. Fixation selon l'une quelconque des revendications 2 à 6, **caractérisée en ce que** les deux plans de déplacement des articulations présentent un angla de 90 ° l' un par rapport à l'autre.

8. Fixation selon l'une quelconque des revendications 1 à 7, **caractérisée en ce que** les moyens permettant de régler et de fixer la longueur de l' engagement duprofilé interne (20) dans le profilé externe (10) sont réalisés de sorte que le profilé interne (20) présente un filet interne (21) s'étendant dans la direction axiale ou un composant (22) présentant un tel filet interne et fixé axialement et solidaire en rotation,
dans laquelle une Vis (50) s'étend avec une tête devis (51), un moyen de réglage (52) et un filet externe (53) s'engageant dans le filet interne (21) à travers au moins une partie du profilé externe (10) et du profilé interne (20) dans la direction axiale, et
dans laquelle la tête de vis (51) est fixée axialement par rapport au profilé externe (10), mais à rotation, et dans laquelle on peut accéder au moyen de réglage (52) de la vis (50) pour régler la longueur de l'engagement du profilé interne (20) dans le profilé externe (10) .

9. Fixation selon l'une quelconque des revendications 1 à 8, **caractérisée en ce que** le profilé interne (20) présente le pied de fixation (40) et la tête de montage (30, 300) est fixée sur leprofilé externe (10) et **en ce que** la tête articulée (42) du pied de fixation (40) est formée d'un seul tenant avec le profilé interne (20).

10. Fixation selon la revendication 9, **caractérisée en ce que** le profilé externe (10), le profilé interne (20) y compris la tête articulée (42), le coussinet à rotule du pied de fixation (43), ainsi que la tête articulée (32, 302) et le coussinet à rotule (33, 303) de la tête de montage (30, 300) sont respectivement des sections découpées dans des profilés sans fin, dans laquelle leurs plans de coupe s'étendent parallèlement à la direction axiale de la fixation et le plan de coupe du profilé externe (10) s'étend transversalement à la direction axiale de la fixation.

11. Fixation selon l'une quelconque des revendications 1 à 10, dans laquelle la tête de montage (30, 300), le profilé externe et le profilé interne (10, 20), ainsi que le pied de fixation (40), sont fabriqués en aluminium ou en alliage d'aluminium.

12. Fixation selon l'une quelconque des revendications 1 à 11, **caractérisée en ce qu'**on agence sur le coussinet à rotule du pied de fixation (40) un moyen isolant (60) de sorte qu'une isolation thermique entre la surface de fond du coussinet à rotule du pied de fixation (40) et une base soit mise en oeuvre.

13. Fixation selon l'une quelconque des revendications 1 à 12, **caractérisée en ce que** le coussinet à rotule (303) de la tête de montage (300) ou la tête articulée (32) de la tête de montage (30) présente une section de protection (310), sur laquelle des éléments à fixer peuvent être protégés sur la fixation, dans laquelle la section de protection (310) est agencée sur le coussinet à rotule (303) ou la tête articulée (32) de manière à garantir la capacité de rotation du coussinet à rotule (303) ou de la tête articulée (32).

14. Fixation selon la revendication 13, **caractérisée en ce que** la section de protection (310) présente un évidement (311), dans lequel un élément de protection (312) est agencé de manière déplaçable et réglable par le biais de moyens de réglage (313) correspondants.

15. Fixation selon la revendication 14, **caractérisée en ce que** l'élément de protection (312) peut être réglé en hauteur dans l'évidement (311) par le biais des moyens de réglage (313).
